(19) Europäisches Patentamt
European Patent Office
Office européen des brevets

(11) **EP 2 766 204 B1**

(12) **FASCICULE DE BREVET EUROPEEN**

(45) Date de publication et mention de la délivrance du brevet:
**06.01.2016 Bulletin 2016/01**

(21) Numéro de dépôt: **12790436.5**

(22) Date de dépôt: **12.10.2012**

(51) Int Cl.:
***B60C 1/00*** *(2006.01)*          ***B60C 9/18*** *(2006.01)*
***B60C 9/20*** *(2006.01)*

(86) Numéro de dépôt international:
**PCT/EP2012/070237**

(87) Numéro de publication internationale:
**WO 2013/053877 (18.04.2013 Gazette 2013/16)**

(54) **PNEUMATIQUE COMPORTANT UNE COUCHE D'ELEMENTS DE RENFORCEMENT CIRCONFERENTIELS**

REIFEN MIT EINER SCHICHT AUS UMLAUFENDEN VERSTÄRKUNGSELEMENTEN

TYRE COMPRISING A LAYER OF CIRCUMFERENTIAL REINFORCING ELEMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.10.2011 FR 1159241**

(43) Date de publication de la demande:
**20.08.2014 Bulletin 2014/34**

(73) Titulaires:
 • **Compagnie Générale des Etablissements Michelin**
 **63000 Clermont-Ferrand (FR)**
 • **MICHELIN Recherche et Technique S.A.**
 **1763 Granges-Paccot (CH)**

(72) Inventeurs:
 • **DOMINGO, Alain**
 **63040 Clermont-Ferrand Cedex 9 (FR)**
 • **BESSON, Jacques**
 **63040 Clermont-Ferrand Cedex 9 (FR)**
 • **BARBARIN, François**
 **63040 Clermont-Ferrand Cedex 9 (FR)**
 • **SALLAZ, Gilles**
 **63040 Clermont-Ferrand Cedex 9 (FR)**
 • **RADULESCU, Robert Ciprian**
 **63040 Clermont-Ferrand Cedex 9 (FR)**

(74) Mandataire: **Le Cam, Stéphane Georges Elie Manufacture Francaise des Pneumatiques Michelin**
**23, place des Carmes-Déchaux**
**DGD/PI - F35 - Ladoux**
**63040 Clermont-Ferrand Cedex 9 (FR)**

(56) Documents cités:
**EP-A1- 0 722 977          EP-A2- 0 849 099**
**WO-A1-2005/016668     WO-A1-2009/083212**
**FR-A1- 2 778 370**

EP 2 766 204 B1

**Description**

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieure à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

On entend par « module d'élasticité » d'un mélange caoutchouteux, un module sécant d'extension à 10 % de déformation et à température ambiante.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités.

Afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Il est notamment connu d'introduire une couche de mélange caoutchouteux entre les extrémités des couches de travail pour créer un découplage entre lesdites extrémités pour limiter les contraintes de cisaillement. De telles couches de découplage doivent toutefois présenter une très bonne cohésion. De telles couches de mélanges caoutchouteux sont par exemple décrites dans la demande de brevet WO 2004/076204.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérèse, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

Les pneumatiques ainsi réalisés permettent effectivement d'améliorer les performances notamment en termes d'endurance.

Par ailleurs, il est connu pour réaliser des pneumatiques à bande de roulement très large ou bien pour conférer à des pneumatiques d'une dimension donnée des capacités de charges plus importantes d'introduire une couche d'éléments de renforcement circonférentiels. La demande de brevet WO 99/24269 décrit par exemple la présence d'une telle couche d'éléments de renforcement circonférentiels.

La couche d'éléments de renforcement circonférentiels est usuellement constituée par au moins un câble métallique enroulé pour former une spire dont l'angle de pose par rapport à la direction circonférentielle est inférieur à 2.5°.

Le document FR 2 778 370 décrit un pneumatique comportant une armature de sommet comprenant deux couches de travail entre lesquelles une couche d'éléments de renforcement circonférentielles est intercalée et les extrémités des couches de travail étant séparées par une couche de mélange caoutchouteux.

Le document EP 0 849 099 décrit un pneumatique pour véhicule de tourisme comprenant une armature sommet constituée de deux nappes de travail dont les extrémités sont séparées par une couche de mélange caoutchouteux d'épaisseur constante.

Un but de l'invention est de fournir des pneumatiques dont les propriétés notamment d'endurance et d'usure sont conservées quel que soit l'usage et dont la fabrication est simplifiée voire dont les coûts de fabrications sont réduits.

Ce but est atteint selon l'invention par un pneumatique à armature de carcasse radiale comprenant une armature de sommet formée d'au moins deux couches de sommet de travail d'éléments de renforcement, croisés d'une couche à l'autre en faisant avec la direction circonférentielle des angles compris entre 10° et 45°, lesdites au moins deux couches de sommet de travail ayant des largeurs axiales inégales, une couche C de mélange caoutchouteux étant disposée entre au moins les extrémités desdites au moins deux couches de sommet de travail, l'armature de sommet étant coiffée radialement d'une bande de roulement, ladite bande de roulement étant réunie à deux bourrelets par l'intermédiaire de deux flancs, l'armature de sommet comportant au moins une couche d'éléments de renforcement circonférentiels radialement disposée entre deux couches de sommet de travail, la distance d entre l'extrémité de la couche de travail axialement la plus étroite et la couche de travail séparée de la couche de travail axialement la plus étroite par la couche C de mélange caoutchouteux étant telle que 1.1ø < d < 2.2ø, ø étant le diamètre des éléments de renforcement de ladite au moins une couche d'éléments de renforcement circonférentiels et, dans un plan méridien, l'épaisseur de la couche C de mélange caoutchouteux étant sensiblement constante sur la largeur axiale comprise entre l'extrémité axialement intérieure de la couche C et l'extrémité de la couche de travail axialement la plus étroite.

Au sens de l'invention, la distance d est mesurée dans un plan méridien de câble à câble, c'est-à-dire entre le câble d'une première couche de travail et le câble d'une seconde couche de travail, selon une direction sensiblement perpendiculaire aux surfaces de la couche C. En d'autres termes, cette distance d englobe l'épaisseur de la première couche C et les épaisseurs respectives des mélanges caoutchouteux de calandrage, radialement extérieure aux câbles de la couche de travail radialement intérieure et radialement intérieure aux câbles de la couche de travail radialement extérieure.

Au sens de l'invention, l'épaisseur de la couche C de mélange caoutchouteux est mesurée entre les deux surfaces de ladite couche C selon la projection orthogonale d'un point d'une surface sur l'autre surface.

Au sens de l'invention, l'épaisseur de la couche C de mélange caoutchouteux est sensiblement constante signifie qu'elle ne varie pas de plus de 0.3 mm. Ces variations d'épaisseur ne sont dues qu'aux phénomènes de fluage lors de la fabrication et de la cuisson du pneumatique. La couche C sous forme de semi-fini, c'est-à-dire en tant qu'éléments prêt à être utilisé pour la réalisation d'un pneumatique présente ainsi avantageusement une épaisseur constante.

Les différentes mesures d'épaisseur sont effectuées sur une coupe transversale d'un pneumatique, le pneumatique étant donc dans un état non gonflé.

La couche C de mélange caoutchouteux permet d'obtenir un découplage desdites couches de sommet de travail afin de répartir les contraintes de cisaillement sur une plus grande épaisseur. Ces contraintes de cisaillement apparaissent notamment du fait de tensions circonférentielles lors du passage dans l'aire de contact.

Au sens de l'invention des couches couplées sont des couches dont les éléments de renforcement respectifs sont séparés radialement d'au plus 1,5 mm, ladite épaisseur de caoutchouc étant mesurée radialement entre les génératrices respectivement supérieure et inférieure desdits éléments de renforcement.

Les conceptions de pneumatiques plus usuelles, qui ne comportent pas de couches d'éléments de renforcement circonférentiels, prévoient des couches de mélange caoutchouteux disposées entre les extrémités des couches de sommet de travail avec des épaisseurs plus importantes notamment au niveau de l'extrémité de la couche de travail la plus étroite et avec un profil d'épaisseur non homogène lorsque celui-ci est vu selon une coupe méridienne du pneumatique pour autoriser une telle épaisseur et pour éviter de trop perturber l'environnement de l'extrémité de la couche de travail la plus étroite. La présence de cette couche de mélange caoutchouteux permet notamment de limiter les contraintes de cisaillement entre les extrémités des couches de sommet de travail, les rigidités circonférentielles desdites couches de sommet de travail étant nulles à leur extrémité. La distance entre l'extrémité de la couche de travail axialement la plus étroite et la couche de travail séparée de la couche de travail axialement la plus étroite par la couche de mélange caoutchouteux, mesurée conformément à la définition de d ci-dessus, est habituellement supérieure à 3.3 mm. Cela correspond à une épaisseur de la couche de mélange caoutchouteux d'au moins 2.5 mm alors que, généralement, son épaisseur tend à chacune de ses extrémités vers une valeur inférieure à 0.5 mm.

Les inventeurs ont su mettre en évidence que la présence d'au moins une couche d'éléments de renforcement circonférentiels radialement entre les deux couches de sommet de travail permet de conserver des performances notamment en termes d'endurance mais également en termes d'usure satisfaisantes avec une couche C de mélange caoutchouteux d'épaisseur sensiblement constante sur la largeur axiale comprise entre l'extrémité axialement intérieure de la couche C et l'extrémité de la couche de travail axialement la plus étroite et telle que la distance d soit comprise entre 1.1ø et 2.2ø. Il semble en effet, que la présence de la couche d'éléments de renforcement circonférentiels contribue suffisamment à la reprise d'au moins une partie de la tension circonférentielle notamment lors du passage dans l'aire de contact pour diminuer les contraintes de cisaillement entre les extrémités des couches de sommet de travail.

Par ailleurs, la couche C de mélange caoutchouteux se présente avantageusement à l'état de semi-fini sous forme d'une couche d'épaisseur constante qui est simple de fabrication et en outre qui peut être stockée simplement. En effet, les couches habituellement utilisées telles que décrites précédemment qui présentent en coupe une forme avec des variations d'épaisseur sont d'une part plus difficiles réaliser et d'autre part plus difficile à stocker. En effet, les variations d'épaisseur créent des problèmes de stockage, ces semi-finis étant le plus souvent stockés sous forme d'enroulement sur bobine.

La fabrication et le stockage de la couche de mélange caoutchouteux conforme à l'invention sous forme de semi-fini étant ainsi tellement simplifiés, il peut en résulter des coûts moindres pour la fabrication du pneumatique, celui-ci pouvant pourtant comporter une couche d'éléments de renforcement circonférentiels en plus en comparaison d'un pneumatique usuel.

Selon une variante avantageuse de l'invention, le module d'élasticité sous tension à 10 % d'allongement de la couche C de mélange caoutchouteux est inférieur à 8 MPa et la valeur maximale de $\tan(\delta)$, noté $\tan(\delta)_{max}$, de la couche C est inférieure à 0.100.

Le facteur de perte $\tan(\delta)$ est une propriété dynamique de la couche de mélange caoutchouteux. Il est mesuré sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz, à une température de 100°C. On effectue un balayage en amplitude de déformation de 0,1 à 50% (cycle aller), puis de 50% à 1% (cycle retour). Pour le cycle retour, on indique la valeur maximale de $\tan(\delta)$ observée, noté $\tan(\delta)_{max}$.

La résistance au roulement est la résistance qui apparaît lorsque le pneumatique roule. Elle est représentée par les pertes hystérétiques liées à la déformation du pneumatique durant une révolution. Les valeurs de fréquence liées à la révolution du pneumatique correspondent à des valeurs de $\tan(\delta)$ mesurée entre 30 et 100°C. La valeur de $\tan(\delta)$ à 100 °C correspond ainsi à un indicateur de la résistance au roulement du pneumatique en roulage.

Il est encore possible d'estimer la résistance au roulement par la mesure des pertes d'énergie par rebond des échantillons à énergie imposée à des températures de 60 °C et exprimées en pourcentage.

Avantageusement selon l'invention, la perte à 60 °C, notée P60, de la couche de mélange caoutchouteux C est inférieure à 20 %.

Selon cette variante de l'invention, les performances en termes de résistance au roulement sont améliorées et permettent de contribuer à une moindre consommation de carburant par les véhicules équipés de tels pneumatiques.

L'utilisation de tels mélanges dont les modules d'élasticité sont inférieurs ou égaux à 8 MPa et dont la valeur $\tan(\delta)_{max}$ est inférieure à 0.100 va permettre d'améliorer les propriétés du pneumatique en matière de résistance au roulement en conservant des propriétés d'endurance satisfaisante.

Un mode de réalisation préféré selon cette variante de réalisation de l'invention, la couche C de mélange caoutchouteux est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :

a) soit par du noir de carbone de surface spécifique BET supérieure à 60 $m^2$/g,

i. employé à un taux compris entre 20 et 40 pce lorsque l'indice de structure du noir (COAN) est supérieur à 85,

ii. employé à un taux compris entre 20 et 60 pce lorsque l'indice de structure du noir (COAN) est inférieur à 85,

b) soit par du noir de carbone de surface spécifique BET inférieure à 60 m$^2$/g, quelle que soit son indice de structure, employé à un taux compris entre 20 et 80 pce, et de préférence entre 30 et 50 pce,

c) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique BET comprise entre 30 et 260 m$^2$/g employée à un taux compris entre 20 et 80 pce, et de préférence entre 30 et 50 pce,

d) soit par un coupage de noir de carbone décrit en (a) et/ou de noir de carbone décrit en (b) et/ou une charge blanche décrite en (c), dans lequel le taux global de charge est compris entre 20 et 80 pce, et de préférence entre 40 et 60 pce.

La mesure de surface spécifique BET est effectuée selon la méthode de BRUNAUER, EMMET et TELLER décrite dans "The Journal of the American Chemical Society", vol. 60, page 309, février 1938, correspondant à la norme NFT 45007 de novembre 1987.

L'indice de structure du noir COAN (Compressed Oil Absorption Number) est mesuré selon la norme ASTM D3493.

Dans le cas d'utilisation de charge claire ou charge blanche, il est nécessaire d'utiliser un agent de couplage et/ou de recouvrement choisi parmi les agents connus de l'homme de l'art. Comme exemples d'agents de couplage préférentiel, on peut citer les alcoxysilanes sulfurés du type polysulfure de bis-(3-trialcoxysilylpropyle), et parmi ceux-ci notamment le tétrasulfure de bis-(3-triéthoxysilylpropyle) commercialisé par la Société DEGUSSA sous les dénominations Si69 pour le produit liquide pur et X50S pour le produit solide (coupage 50/50 en poids avec du noir N330). Comme exemples d'agents de recouvrement on peut citer un alcool gras, un alkylalcoxysilane tel qu'un hexadécyltriméthoxy ou triéthoxysilane respectivement commercialisés par la Société DEGUSSA sous les dénominations Si116 et Si216, la diphénylguanidine, un polyéthylène glycol, une huile silicone éventuellement modifié au moyen des fonctions OH ou alcoxy. L'agent de recouvrement et/ou de couplage est utilisé dans un rapport pondéral par rapport à la charge ≥ à 1/100 et ≤ à 20/100, et préférentiellement compris entre 2/100 et 15/100 lorsque la charge claire représente la totalité de la charge renforçante et compris entre 1/100 et 20/100 lorsque la charge renforçante est constituée par un coupage de noir de carbone et de charge claire.

Comme autres exemples de charges renforçantes ayant la morphologie et les fonctions de surface SiOH et/ou AlOH des matières de type silice et/ou alumine précédemment décrites et pouvant être utilisées selon l'invention en remplacement partiel ou total de celles-ci, on peut citer les noirs de carbone modifiés soit au cours de la synthèse par addition à l'huile d'alimentation du four d'un composé du silicium et/ou d'aluminium soit après la synthèse en ajoutant, à une suspension aqueuse de noir de carbone dans une solution de silicate et/ou d'aluminate de sodium, un acide de façon à recouvrir au moins partiellement la surface du noir de carbone de fonctions SiOH et/ou AlOH. Comme exemples non limitatifs de ce type de charges carbonées avec en surface des fonctions SiOH et/ou AlOH, on peut citer les charges type CSDP décrites dans la Conférence N° 24 du Meeting ACS, Rubber Division, Anaheim, Californie, 6-9 mai 1997 ainsi que celles de la demande de brevet EP-A-0 799 854.

Lorsqu'une charge claire est utilisée comme seule charge renforçante, les propriétés d'hystérèse et de cohésion sont obtenues en utilisant une silice précipitée ou pyrogénée, ou bien une alumine précipitée ou bien encore un aluminosilicate de surface spécifique BET comprise entre 30 et 260 m$^2$/g. Comme exemples non limitatifs de ce type de charge, on peut citer les silices KS404 de la Société Akzo, Ultrasil VN2 ou VN3 et BV3370GR de la Société Degussa, Zeopol 8745 de la Société Huber, Zeosil 175MP ou Zeosil 1165MP de la société Rhodia, HI-SIL 2000 de la Société PPG etc...

Parmi les élastomères diéniques pouvant être utilisés en coupage avec le caoutchouc naturel ou un polyisoprène synthétique à majorité d'enchaînements cis-1,4, on peut citer un polybutadiène (BR) de préférence à majorité d'enchaînements cis-1,4, un copolymère styrène-butadiène (SBR) solution ou émulsion, un copolymère butadiène-isoprène (BIR) ou bien encore un terpolymère styrène-butadiène-isoprène (SBIR). Ces élastomères peuvent être des élastomères modifiés en cours de polymérisation ou après polymérisation au moyen d'agents de ramification comme un divinylbenzène ou d'agents d'étoilage tels que des carbonates, des halogénoétains, des halogénosiliciums ou bien encore au moyen d'agents de fonctionnalisation conduisant à un greffage sur la chaîne ou en bout de chaîne de fonctions oxygénées carbonyle, carboxyle ou bien d'une fonction amine comme par exemple par action de la diméthyl ou de la diéthylamino benzophénone. Dans le cas de coupages de caoutchouc naturel ou de polyisoprène synthétique à majorité d'enchaînements cis-1,4 avec un ou plusieurs des élastomères diéniques, mentionnés ci-dessus, le caoutchouc naturel ou le polyisoprène synthétique est utilisé de préférence à un taux majoritaire et plus préférentiellement à un taux supérieur à 70 pce.

Selon ce mode de réalisation préféré de l'invention, un module d'élasticité plus faible s'accompagne généralement d'un module visqueux G" plus faible, cette évolution s'avérant favorable à une réduction de la résistance au roulement du pneumatique.

Les conceptions de pneumatiques plus usuelles prévoient des couches de mélange caoutchouteux disposées entre les extrémités des couches de sommet de travail avec des modules d'élasticité sous tension à 10 % d'allongement supérieurs à 8.5 MPa, notamment pour permettre de limiter les contraintes de cisaillement entre les extrémités des couches de sommet de travail, les rigidités circonférentielles desdites couches de sommet de travail étant nulles à leur extrémité. De tels modules qui le plus souvent sont même supérieurs à 9 MPa permettent d'éviter les amorces et la propagation de fissuration dans les mélanges caoutchouteux aux extrémités desdites couches de sommet de travail et plus particulièrement à l'extrémité de la couche de travail la plus étroite.

Les inventeurs ont su mettre en évidence que la présence d'au moins une couche d'éléments de renforcement circonférentiels permet de conserver des performances notamment en termes d'endurance mais également en termes d'usure satisfaisantes avec un module d'élasticité sous tension à 10 % d'allongement de la couche C inférieur à 8 MPa.

Les inventeurs ont encore su mettre en évidence que la cohésion de la couche C, lorsqu'elle présente un module d'élasticité sous tension à 10 % d'allongement inférieur à 8 MPa, reste satisfaisante.

Au sens de l'invention, un mélange caoutchouteux cohésif est un mélange caoutchouteux notamment robuste à la fissuration. La cohésion d'un mélange est ainsi évaluée par un test de fissuration en fatigue réalisé sur une éprouvette « PS » (pure shear). Il consiste à déterminer, après entaillage de l'éprouvette, la vitesse de propagation de fissure « Vp » (nm/cycle) en fonction du taux de restitution d'énergie « E » ($J/m^2$). Le domaine expérimental couvert par la mesure est compris dans la plage -20°C et +150°C en température, avec une atmosphère d'air ou d'azote. La sollicitation de l'éprouvette est un déplacement dynamique imposé d'amplitude comprise entre 0.1mm et 10mm sous forme de sollicitation de type impulsionnel (signal « haversine » tangent) avec un temps de repos égal à la durée de l'impulsion ; la fréquence du signal est de l'ordre de 10Hz en moyenne.

La mesure comprend 3 parties :

- Une accommodation de l'éprouvette « PS », de 1000 cycles à 27% de déformation.

- une caractérisation énergétique pour déterminer la loi « E » = f (déformation). Le taux de restitution d'énergie « E » est égal à W0*h0, avec W0 = énergie fournie au matériau par cycle et par unité de volume et h0 = hauteur initiale de l'éprouvette. L'exploitation des acquisitions « force / déplacement » donne ainsi la relation entre « E » et l'amplitude de la sollicitation.

- La mesure de fissuration, après entaillage de l'éprouvette « PS ». Les informations recueillies conduisent à déterminer la vitesse de propagation de la fissure « Vp » en fonction du niveau de sollicitation imposé « E ».

Les inventeurs ont notamment mis en évidence que la présence d'au moins une couche d'éléments de renforcement circonférentiels contribue à une moindre évolution de la cohésion de la couche C. En effet, les conceptions de pneumatiques plus usuelles comportant notamment des couches de mélange caoutchouteux disposées entre les extrémités des couches de sommet de travail avec des modules d'élasticité sous tension à 10 % d'allongement supérieurs à 8.5 MPa, conduisent à une évolution de la cohésion desdites couches de mélange caoutchouteux disposées entre les extrémités des couches de sommet de travail, celle-ci tendant à s'affaiblir. Les inventeurs constatent que la présence d'au moins une couche d'éléments de renforcement circonférentiels qui limite les contraintes de cisaillement entre les extrémités des couches de sommet de travail et en outre, limite les augmentations de température conduit à une faible évolution de la cohésion de la couche C. Les inventeurs considèrent ainsi que la cohésion de la couche C, plus faible que ce qui existe dans les conceptions de pneumatiques plus usuelles, est satisfaisante dans la conception du pneumatique selon l'invention.

Selon un mode de réalisation de l'invention, la couche de mélange caoutchouteux peut être réalisée par un empilage de plusieurs couches pour obtenir l'épaisseur souhaitée.

Selon un mode de réalisation avantageux de l'invention, la couche de sommet de travail axialement la plus large est radialement à l'intérieur des autres couches de sommet de travail.

De préférence encore, la largeur axiale D de la couche de mélange caoutchouteux C comprise entre l'extrémité axialement la plus à l'intérieure de ladite couche de mélange caoutchouteux C et l'extrémité de la couche de sommet de travail axialement la moins large est telle que :

$$10.\phi_2 \leq D \leq 25.\phi_2$$

avec $\phi_2$, diamètre des éléments de renforcement de la couche de sommet de travail axialement la moins large. Une telle relation définit une zone d'engagement entre la couche de mélange caoutchouteux C et la couche de sommet de travail axialement la moins large. Un tel engagement en dessous d'une valeur égale à trois fois le diamètre des éléments de renforcement de la couche de travail axialement la moins large peut ne pas être suffisant pour obtenir un découplage des couche de sommet de travail pour notamment obtenir une atténuation des sollicitations en extrémité de la couche de sommet de travail axialement la moins large. Une valeur de cet engagement supérieure à vingt fois le diamètre des éléments de renforcement de la couche de travail axialement la moins large peut conduire à une diminution trop importante de la rigidité de dérive de l'armature de sommet du pneumatique.

Selon un mode de réalisation de l'invention, au moins une couche de mélange caoutchouteux B bordant l'extrémité d'une couche de sommet de travail, le module d'élasticité sous tension à 10 % d'allongement de ladite au moins une couche de mélange caoutchouteux B est inférieur à 8 MPa et la valeur maximale de $\tan(\delta)$, noté $\tan(\delta)_{max}$, de ladite couche de mélange caoutchouteux B est inférieure à 0.100.

Au sens de l'invention, le terme « border » doit être compris comme signifiant que la couche de mélange caoutchouteux B est axialement et/ou radialement adjacente à l'extrémité axialement extérieure de ladite couche de sommet de travail.

Avantageusement encore, selon ce mode de réalisation de l'invention, la couche de mélange caoutchouteux B est, de manière semblable à la première couche C de mélange caoutchouteux, un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :

a) soit par du noir de carbone de surface spécifique BET supérieure à 60 m$^2$/g,

i. employé à un taux compris entre 20 et 40 pce lorsque l'indice de structure du noir (COAN) est supérieur à 85,

ii. employé à un taux compris entre 20 et 60 pce lorsque l'indice de structure du noir (COAN) est inférieur à 85,

b) soit par du noir de carbone de surface spécifique BET inférieure à 60 m$^2$/g, quelle que soit son indice de structure, employé à un taux compris entre 20 et 80 pce, et de préférence entre 30 et 50 pce,

c) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique BET comprise entre 30 et 260 m$^2$/g employée à un taux compris entre 20 et 80 pce, et de préférence entre 30 et 50 pce,

d) soit par un coupage de noir de carbone décrit en (a) et/ou de noir de carbone décrit en (b) et/ou une charge blanche décrite en (c), dans lequel le taux global de charge est compris entre 20 et 80 pce, et de préférence entre 40 et 60 pce.

Conformément à ce mode de réalisation de l'invention, contrairement aux conceptions plus usuelles des pneumatiques, au moins une couche bordant l'extrémité d'une couche de sommet de travail et avantageusement, l'ensemble des couches bordant les extrémités des couches de sommet de travail présentent un module d'élasticité inférieur à 8 MPa sont ainsi moins rigides que les couches de mélanges caoutchouteux utilisées habituellement à ces postes dans la conception des pneumatiques.

Selon une variante de réalisation de l'invention, le module d'élasticité sous tension à 10 % d'allongement d'au moins une couche de calandrage d'au moins une couche de sommet de travail est inférieur à 8,5 MPa et la valeur maximale de $\tan(\delta)$, noté $\tan(\delta)_{max}$, de ladite au moins une couche de calandrage d'au moins une couche de sommet de travail est inférieure à 0.100.

Habituellement, les modules d'élasticité sous tension à 10 % d'allongement des couches de calandrage des couches de sommet de travail sont supérieurs à 10 MPa. De tels modules d'élasticité sont requis pour permettre de limiter les mises en compression des éléments de renforcement des couches de sommet de travail notamment lorsque le véhicule suit un parcours sinueux, lors de manoeuvres sur les parkings ou bien lors du passage de ronds-points. En effet, les cisaillements selon la direction axiale qui s'opèrent sur la bande de roulement dans la zone de la surface de contact avec le sol conduisent à la mise en compression des éléments de renforcement d'une couche de sommet de travail.

Les inventeurs ont encore su mettre en évidence que la couche d'élément de renforcement circonférentiels autorise des modules d'élasticité plus faible sans nuire aux propriétés d'endurance du pneumatique du fait des mises en compressions des éléments de renforcement des couches de sommet de travail telles que décrites précédemment.

Comme dans le cas de la couche de mélange caoutchouteux C, l'utilisation d'au moins une couche de calandrage d'au moins une couche de sommet de travail dont le module d'élasticité est inférieur ou égal à 8,5 MPa et dont la valeur $\tan(\delta)_{max}$ est inférieure à 0.100 va permettre d'améliorer les propriétés du pneumatique en matière de résistance au roulement en conservant des propriétés d'endurance satisfaisante.

Les inventeurs ont également mis en évidence que la combinaison d'une couche d'éléments de renforcement circonférentiels et de modules d'élasticité sous tension à 10 % d'allongement des couches de calandrages des couches de sommet de travail inférieurs à 8,5 MPa permet de conserver un effet ply-steer satisfaisant.

L'effet ply-steer correspond à l'apparition d'une poussée transversale à dérive nulle du fait de la structure du pneumatique et notamment de la présence de couches de sommet de travail d'éléments de renforcement formant un angle avec la direction circonférentiel compris entre 10 et 45° qui sont à l'origine de ladite poussée lors de leurs déformations du fait du passage dans l'aire de contact formée par l'écrasement du pneumatique sur le sol lorsque le pneumatique est en roulage.

Les inventeurs ont ainsi mis en évidence que l'effet ply-steer, qui est modifié du fait de la présence d'une couche d'éléments de renforcement circonférentiels, voit sa variation atténuée du fait du choix de mélanges de calandrages des couches de travail avec des modules d'élasticité réduits. En effet, la poussée transversale augmente du fait de la présence d'une couche d'éléments de renforcement circonférentiels par rapport à un même pneumatique sans ladite couche d'éléments de renforcement circonférentiels et cette augmentation est atténuée par un choix de mélanges de calandrages des couches de travail avec des modules d'élasticité réduits par rapport à ceux habituellement utilisés.

Selon un mode de réalisation préféré de l'invention, ladite au moins une couche de calandrage d'au moins une couche de sommet de travail est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :

a) soit par du noir de carbone de surface spécifique BET supérieure à 60 m$^2$/g,

i. employé à un taux compris entre 20 et 40 pce lorsque l'indice de structure du noir (COAN) est supérieur à 85,

ii. employé à un taux compris entre 20 et 60 pce lorsque l'indice de structure du noir (COAN) est inférieur à 85,

b) soit par du noir de carbone de surface spécifique BET inférieure à 60 m$^2$/g, quelle que soit son indice de structure, employé à un taux compris entre 20 et 80 pce, et de préférence entre 30 et 50 pce,

c) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique BET comprise entre 30 et 260 m$^2$/g employée à un taux compris entre 20 et 80 pce, et de préférence entre 30 et 50 pce,

d) soit par un coupage de noir de carbone décrit en (a) et/ou de noir de carbone décrit en (b) et/ou une charge blanche décrite en (c), dans lequel le taux global de charge est compris entre 20 et 80 pce, et de préférence entre 40 et 60 pce.

Dans le cas d'utilisation de charge claire ou charge blanche, il est nécessaire d'utiliser un agent de couplage et/ou de recouvrement choisi parmi les agents connus de l'homme de l'art. Comme exemples d'agents de couplage préférentiel, on peut citer les alcoxysilanes sulfurés du type polysulfure de bis-(3-trialcoxysilylpropyle), et parmi ceux-ci notamment le tétrasulfure de bis-(3-triéthoxysilylpropyle) commercialisé par la Société DEGUSSA sous les dénominations Si69 pour le produit liquide pur et X50S pour le produit solide (coupage 50/50 en poids avec du noir N330). Comme exemples d'agents de recouvrement on peut citer un alcool gras, un alkylalcoxysilane tel qu'un hexadécyltriméthoxy ou triéthoxysilane respectivement commercialisés par la Société DEGUSSA sous les dénominations Si116 et Si216, la diphénylguanidine, un polyéthylène glycol, une huile silicone éventuellement modifié au moyen des fonctions OH ou alcoxy. L'agent de recouvrement et/ou de couplage est utilisé dans un rapport pondéral par rapport à la charge $\geq$ à 1/100 et $\leq$ à 20/100, et préférentiellement compris entre 2/100 et 15/100 lorsque la charge claire représente la totalité de la charge renforçante et compris entre 1/100 et 20/100 lorsque la charge renforçante est constituée par un coupage de noir de carbone et de charge claire.

Comme autres exemples de charges renforçantes ayant la morphologie et les fonctions de surface SiOH et/ou AlOH des matières de type silice et/ou alumine précédemment décrites et pouvant être utilisées selon l'invention en remplacement partiel ou total de celles-ci, on peut citer les noirs de carbone modifiés soit au cours de la synthèse par addition à l'huile d'alimentation du four d'un composé du silicium et/ou d'aluminium soit après la synthèse en ajoutant, à une suspension aqueuse de noir de carbone dans une solution de silicate et/ou d'aluminate de sodium, un acide de façon à recouvrir au moins partiellement la surface du noir de carbone de fonctions SiOH et/ou AlOH. Comme exemples non limitatifs de ce type de charges carbonées avec en surface des fonctions SiOH et/ou AlOH, on peut citer les charges type CSDP décrites dans la Conférence N° 24 du Meeting ACS, Rubber Division, Anaheim, Californie, 6-9 mai 1997 ainsi que celles de la demande de brevet EP-A-0 799 854.

Lorsqu'une charge claire est utilisée comme seule charge renforçante, les propriétés d'hystérèse et de cohésion sont obtenues en utilisant une silice précipitée ou pyrogénée, ou bien une alumine précipitée ou bien encore un aluminosilicate de surface spécifique BET comprise entre 30 et 260 m$^2$/g. Comme exemples non limitatifs de ce type de charge, on peut citer les silices KS404 de la Société Akzo, Ultrasil VN2 ou VN3 et BV3370GR de la Société Degussa, Zeopol 8745 de la Société Huber, Zeosil 175MP ou Zeosil 1165MP de la société Rhodia, HI-SIL 2000 de la Société PPG etc...

Parmi les élastomères diéniques pouvant être utilisés en coupage avec le caoutchouc naturel ou un polyisoprène synthétique à majorité d'enchaînements cis-1,4, on peut citer un polybutadiène (BR) de préférence à majorité d'enchaînements cis-1,4, un copolymère styrène-butadiène (SBR) solution ou émulsion, un copolymère butadiène-isoprène (BIR) ou bien encore un terpolymère styrène-butadiène-isoprène (SBIR). Ces élastomères peuvent être des élastomères modifiés en cours de polymérisation ou après polymérisation au moyen d'agents de ramification comme un divinylbenzène ou d'agents d'étoilage tels que des carbonates, des halogénoétains, des halogénosiliciums ou bien encore au moyen d'agents de fonctionnalisation conduisant à un greffage sur la chaîne ou en bout de chaîne de fonctions oxygénées carbonyle, carboxyle ou bien d'une fonction amine comme par exemple par action de la diméthyl ou de la diéthylamino benzophénone. Dans le cas de coupages de caoutchouc naturel ou de polyisoprène synthétique à majorité d'enchaînements cis-1,4 avec un ou plusieurs des élastomères diéniques, mentionnés ci-dessus, le caoutchouc naturel ou le polyisoprène synthétique est utilisé de préférence à un taux majoritaire et plus préférentiellement à un taux supérieur à 70 pce.

Avantageusement encore selon l'invention, la différence entre le module d'élasticité sous tension à 10 % d'allongement de la première couche C et le module d'élasticité sous tension à 10 % d'allongement de ladite au moins une couche de calandrage d'au moins une couche de sommet de travail est inférieure à 2 MPa.

Selon un premier mode de réalisation, le module d'élasticité du calandrage d'au moins la couche de sommet de travail la plus étroite est supérieure à celui de ladite couche C de mélange caoutchouteux pour que l'empilement desdites couches présente un gradient de module d'élasticité favorable à la lutte contre l'amorce de fissuration en extrémité de la couche de sommet de travail la plus étroite.

Selon un deuxième mode de réalisation, les modules d'élasticité du calandrage des couches de sommet de travail et de celui de ladite couche C de mélange caoutchouteux sont identiques et avantageusement encore les mélanges caoutchouteux sont les mêmes pour simplifier les conditions industrielles de fabrication du pneumatique.

Selon une réalisation avantageuse de l'invention, lesdits éléments de renforcement d'au moins une couche de sommet de travail sont des câbles à couches saturées, au moins une couche interne étant gainée d'une couche constituée d'une composition polymérique telle qu'une composition de caoutchouc non réticulable, réticulable ou réticulée, de préférence à base d'au moins un élastomère diénique.

Des câbles dits "à couches" ("*layered cords*") ou "multicouches" sont des câbles constitués d'un noyau central et d'une ou plusieurs couches de brins ou fils pratiquement concentriques disposées autour de ce noyau central.

Au sens de l'invention, une couche saturée d'un câble à couches est une couche constituée de fils dans laquelle il n'existe pas suffisamment de place pour y ajouter au moins un fil supplémentaire.

Les inventeurs ont su mettre en évidence que la présence des câbles tels qu'ils viennent d'être décrits comme éléments de renforcement des couches de sommet de travail permettent de contribuer à de meilleures performances en termes d'endurance.

En effet, il apparaît comme expliqué ci-dessus que les mélanges caoutchouteux des calandrages des couches de travail permettent de diminuer la résistance au roulement du pneumatique. Cela se traduit par une baisse des températures de ces mélanges caoutchouteux, lors de l'utilisation du pneumatique, qui peut entraîner une moindre protection des éléments de renforcement vis-à-vis des phénomènes d'oxydation dans certains cas d'utilisation du pneumatique. En effet, les propriétés des mélanges caoutchouteux relatives au blocage de l'oxygène diminuent avec la température et la présence d'oxygène peut conduire à une dégénérescence progressive des propriétés mécaniques des câbles, pour les conditions de roulage les plus sévères, et peut altérer la durée de vie de ces câbles.

La présence de la gaine de caoutchouc au sein des câbles décrits ci-dessus vient compenser cet éventuel risque d'oxydation des éléments de renforcement, la gaine contribuant au blocage de l'oxygène.

Par l'expression "composition à base d'au moins un élastomère diénique", on entend de manière connue que la composition comprend à titre majoritaire (i.e. selon une fraction massique supérieure à 50%) ce ou ces élastomères diéniques.

On notera que la gaine selon l'invention s'étend d'une manière continue autour de la couche qu'elle recouvre (c'est-à-dire que cette gaine est continue dans la direction "orthoradiale" du câble qui est perpendiculaire à son rayon), de manière à former un manchon continu de section transversale qui est avantageusement pratiquement circulaire.

On notera également que la composition de caoutchouc de cette gaine peut être réticulable ou réticulée, c'est-à-dire qu'elle comprend par définition un système de réticulation adapté pour permettre la réticulation de la composition lors de sa cuisson (i.e., son durcissement et non sa fusion) ; ainsi, cette composition de caoutchouc peut être qualifiée d'infusible, du fait qu'elle ne peut pas être fondue par chauffage à quelque température que ce soit.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De préférence, le système de réticulation de la gaine de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus.

La composition de caoutchouc de la gaine selon l'invention peut comprendre, outre ledit système de réticulation, tous les ingrédients habituels utilisables dans les compositions de caoutchouc pour pneumatiques, tels que des charges renforçantes à base de noir de carbone et/ou d'une charge inorganique renforçante telle que silice, des agents anti-vieillissement, par exemple des antioxydants, des huiles d'extension, des plastifiants ou des agents facilitant la mise en oeuvre des compositions à l'état cru, des accepteurs et donneurs de méthylène, des résines, des bismaléimides, des systèmes promoteurs d'adhésion connus du type "RFS" (résorcinol-formaldéhyde-silice) ou sels métalliques, notamment des sels de cobalt.

A titre préférentiel, la composition de cette gaine est choisie identique à la composition utilisée pour la couche de calandrage de la couche de sommet de travail que les câbles sont destinés à renforcer. Ainsi, il n'y a aucun problème d'incompatibilité éventuelle entre les matériaux respectifs de la gaine et de la matrice de caoutchouc.

Selon une variante de l'invention, lesdits câbles d'au moins une couche de sommet de travail sont des câbles à couches de construction [L+M], comportant une première couche C1 à L fils de diamètre $d_1$ enroulés ensemble en hélice selon un pas $p_1$ avec L allant de 1 à 4, entourée d'au moins une couche intermédiaire C2 à M fils de diamètre $d_2$ enroulés ensemble en hélice selon un pas $p_2$ avec M allant de 3 à 12, une gaine constituée d'une composition de caoutchouc non réticulable, réticulable ou réticulée à base d'au moins un élastomère diénique, recouvrant, dans la construction ladite première couche C1.

De préférence, le diamètre des fils de la première couche de la couche interne (C1) est compris entre 0.10 et 0.5 mm et le diamètre des fils de la couche externe (C2) est compris entre 0.10 et 0.5 mm.

De préférence encore, le pas d'hélice d'enroulement desdits fils de la couche externe (C2) est compris entre 8 et 25 mm.

Au sens de l'invention, le pas d'hélice représente la longueur, mesurée parallèlement à l'axe du câble, au bout de laquelle un fil ayant ce pas effectue un tour complet autour de l'axe du câble ; ainsi, si l'on sectionne l'axe par deux plans perpendiculaires audit axe et séparés par une longueur égale au pas d'un fil d'une couche constitutive du câble, l'axe de ce fil a dans ces deux plans la même position sur les deux cercles correspondant à la couche du fil considéré.

Avantageusement, le câble présente l'une, et plus préférentiellement encore l'ensemble des caractéristiques suivantes qui est vérifié(e) :

- la couche C2 est une couche saturée, c'est-à-dire qu'il n'existe pas suffisamment de place dans cette couche pour y ajouter au moins un (N+1)ème fil de diamètre $d_2$, N représentant alors le nombre maximal de fils enroulables en une couche autour de la couche C1 ;
- la gaine de caoutchouc recouvre en outre la couche interne C1 et/ou sépare les fils deux à deux adjacents de la couche externe C2 ;
- la gaine de caoutchouc recouvre pratiquement la demi-circonférence radialement intérieure de chaque fil de la couche C2, de telle sorte qu'elle sépare les fils deux à deux adjacents de cette couche C2.

De préférence, la gaine de caoutchouc présente une épaisseur moyenne allant de 0,010 mm à 0,040 mm.

D'une manière générale, lesdits câbles selon l'invention peuvent être réalisés avec tout type de fils métalliques, notamment en acier, par exemple des fils en acier au carbone et/ou des fils en acier inoxydable. On utilise de préférence un acier au carbone, mais il est bien entendu possible d'utiliser d'autres aciers ou d'autres alliages.

Lorsqu'un acier au carbone est utilisé, sa teneur en carbone (% en poids d'acier) est de préférence comprise entre 0,1% et 1,2%, plus préférentiellement de 0,4% à 1,0% ; ces teneurs représentent un bon compromis entre les propriétés mécaniques requises pour le pneumatique et la faisabilité du fil. Il est à noter qu'une teneur en carbone comprise entre 0,5% et 0,6% rend de tels aciers finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Lesdits câbles selon l'invention pourront être obtenus selon différentes techniques connues de l'homme du métier, par exemple en deux étapes, tout d'abord par gainage via une tête d'extrusion de l'âme ou couches C1, étape suivie dans un deuxième temps d'une opération finale de câblage ou retordage des M fils restants (couche C2) autour de la couche C1 ainsi gainée. Le problème de collant à l'état cru posé par la gaine de caoutchouc, lors des opérations intermédiaires éventuelles de bobinage et débobinage pourra être résolu de manière connue par l'homme du métier, par exemple par l'emploi d'un film intercalaire en matière plastique.

De tels câbles d'au moins une couche de sommet de travail sont par exemple choisis parmi les câbles décrits dans les demandes de brevet WO 2006/013077 et WO 2009/083212.

Selon une variante avantageuse de réalisation de l'invention, la couche d'éléments de renforcement circonférentiels présente une largeur axiale supérieure à 0.5xS.

S est la largeur maximale axiale du pneumatique, lorsque ce dernier est monté sur sa jante de service et gonflé à sa pression recommandée.

Les largeurs axiales des couches d'éléments de renforcement sont mesurées sur une coupe transversale d'un pneumatique, le pneumatique étant donc dans un état non gonflé.

Selon une réalisation préférée de l'invention, la différence entre la largeur axiale de la couche de sommet de travail axialement la plus large et la largeur axiale de la couche de sommet de travail axialement la moins large étant comprise entre 10 et 30 mm.

Avantageusement encore selon l'invention, les largeurs axiales des couches de sommet de travail radialement adjacentes à la couche d'éléments de renforcement circonférentiels sont supérieures à la largeur axiale de ladite couche d'éléments de renforcement circonférentiels et de préférence, lesdites couches de sommet de travail adjacentes à la couche d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par ladite couche C de mélange de caoutchouc au moins sur le restant de la largeur commune aux dites deux couches de travail.

La présence de tels couplages entre les couches de sommet de travail adjacentes à la couche d'éléments de renforcement circonférentiels permettent la diminution des contraintes de tension agissant sur les éléments circonférentiels axialement le plus à l'extérieur et situé le plus près du couplage.

Selon un mode de réalisation avantageux de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement des parties axialement extérieures et de la partie centrale d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensemble chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche d'éléments de renforcement circonférentiels permet notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels peuvent être formées d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche additionnelle est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche additionnelle étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport a/λ de l'amplitude d'ondulation sur la longueur d'onde étant au plus égale à 0,09. De préférence, le module d'élasticité à la traction par unité de largeur de la couche additionnelle est inférieur au module d'élasticité à la traction, mesuré dans les mêmes conditions, de la couche de sommet de travail la plus extensible.

Les éléments métalliques sont préférentiellement des câbles d'acier.

Selon un mode de réalisation préféré de l'invention, les éléments de renforcement des couches de sommet de travail sont des câbles métalliques inextensibles.

L'invention prévoit encore avantageusement pour diminuer les contraintes de tension agissant sur les éléments circonférentiels axialement le plus à l'extérieur que l'angle formé avec la direction circonférentielle par les éléments de renforcement des couches de sommet de travail est inférieur à 30° et de préférence inférieur à 25°.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

Le pneumatique selon l'invention tel qu'il vient d'être décrit dans ses variantes de réalisation présente donc une résistance au roulement améliorée par rapport aux pneumatiques usuels tout en conservant des performances en termes d'endurance et d'usure comparables.

En outre, les modules d'élasticité plus faibles des différents mélanges caoutchouteux permettent d'assouplir le sommet du pneumatique et ainsi limiter les risques d'agressions du sommet et de corrosion des éléments de renforcement des couches d'armature de sommet lorsque par exemple des cailloux sont retenus dans les fonds de sculpture.

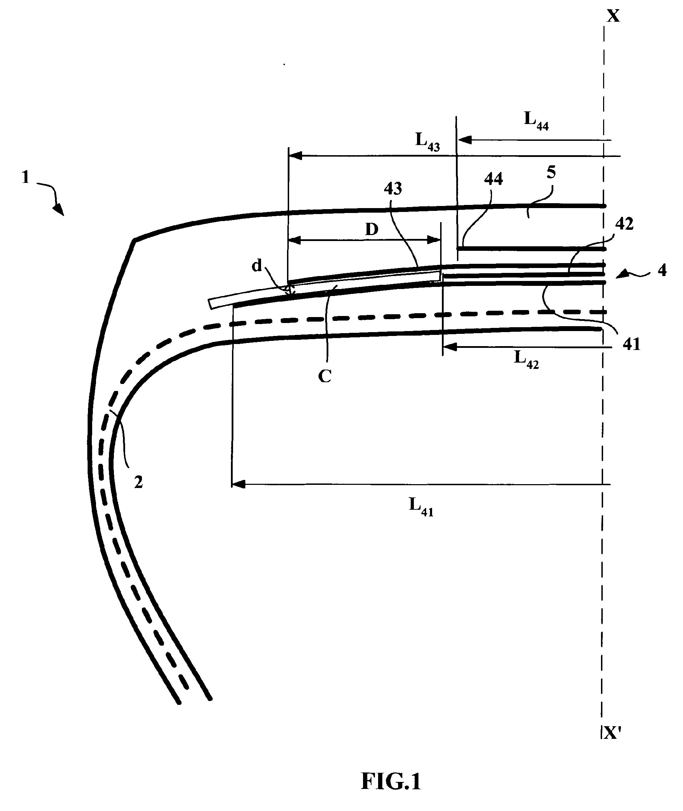

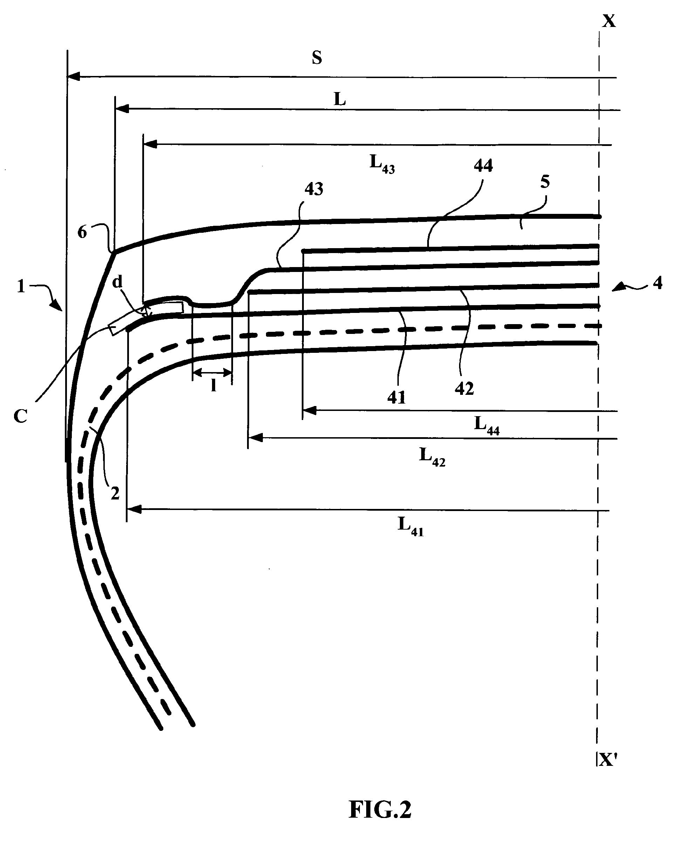

D'autres détails et caractéristiques avantageux de l'invention ressortiront ci-après de la description des exemples de réalisation de l'invention en référence aux figures 1 et 2 qui représentent :

- figure1, une vue méridienne d'un schéma d'un pneumatique selon un mode de réalisation de l'invention,

- figure 2, une vue méridienne d'un schéma d'un pneumatique selon un deuxième mode de réalisation de l'invention.

Les figures ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

Sur la figure 1, le pneumatique 1, de dimension 315/70 R 22.5, a un rapport de forme H/S égal à 0,70, H étant la hauteur du pneumatique 1 sur sa jante de montage et S sa largeur axiale maximale. Ledit pneumatique 1 comprend une armature de carcasse radiale 2 ancrée dans deux bourrelets, non représentés sur la figure. L'armature de carcasse est formée d'une seule couche de câbles métalliques. Cette armature de carcasse 2 est frettée par une armature de sommet 4, formée radialement de l'intérieur à l'extérieur :

- d'une première couche de travail 41 formée de câbles métalliques inextensibles 9.28 non frettés, continus sur toute la largeur de la nappe, orientés d'un angle égal à 24°,

- d'une couche d'éléments de renforcement circonférentiels 42 formée de câbles métalliques en acier 21x23, de type "bi-module",

- d'une seconde couche de travail 43 formée de câbles métalliques inextensibles 9.28 non frettés, continus sur toute la largeur de la nappe, orientés d'un angle égal à 24° et croisés avec les câbles métalliques de la couche 41,

- d'une couche de protection 44 formées de câbles métalliques élastiques 6.35.

L'armature de sommet est elle-même coiffée d'une bande de roulement 5.

La largeur axiale maximale S du pneumatique est égale à 317 mm.

La largeur axiale $L_{41}$ de la première couche de travail 41 est égale à 252 mm.

La largeur axiale $L_{43}$ de la deuxième couche de travail 43 est égale à 232 mm. La différence entre les largeurs $L_{41}$ et $L_{43}$ est égale à 15 mm.

Quant à la largeur axiale $L_{42}$ de la couche d'éléments de renforcement circonférentiels 42, elle est égale à 194 mm.

La dernière nappe de sommet 44, dite de protection, a une largeur $L_{44}$ égale à 124 mm.

Conformément à l'invention, une couche de mélange caoutchouteux C vient découpler les extrémités des couches de sommet de travail 41 et 43.

La zone d'engagement de la couche C entre les deux couches de sommet de travail 41 et 43 est définie par son épaisseur et plus précisément la distance radiale d entre l'extrémité de la couche 43 et la couche 41 et par la largeur axiale D de la couche C comprise entre l'extrémité axialement intérieure de ladite couche C et l'extrémité de la couche de sommet de travail 43 radialement extérieure. La distance radiale d est égale à 2 mm, ce qui correspond à une épaisseur de la couche C égale à 1.2 mm. Conformément à l'invention, l'épaisseur de la couche C est sensiblement identique dans une vue méridienne sur la largeur axiale comprise entre l'extrémité axialement intérieure de la couche C et l'extrémité de la couche de travail axialement la plus étroite.

Le diamètre des éléments de renforcement circonférentiels de la couche 42 est égale à 1.35 mm. La distance d est donc égale à 1.48 fois le diamètre ø de ces éléments.

La distance axiale D est égale à 20 mm, soit environ 19 fois le diamètre $\phi_2$ des éléments de renforcement de la nappe de travail 42, le diamètre $\phi_2$ étant égal à 1.07 mm.

Sur la figure 2, le pneumatique 1 diffère de celui représenté sur la figure 1 en ce que les deux couches de travail 41 et 43 sont, de chaque côté du plan équatorial et axialement dans le prolongement de la couche d'éléments de renforcement circonférentiels 42, couplées sur une largeur axiale 1 : les câbles de la première couche de travail 41 et les câbles de la deuxième couche de travail 43, sur la largeur axiale de couplage 1 des deux couches, sont séparés radialement entre eux par une couche de gomme, dont l'épaisseur est minimale et correspond au double de l'épaisseur de la couche caoutchouteuse de calandrage des câbles métalliques 9.28 non frettés dont est formée chaque couche de travail 41, 43, soit 0,8 mm. Sur la largeur restante commune aux deux couches de travail, les deux couches de travail 41, 43 sont séparés par la couche de mélange caoutchouteux C, l'épaisseur de ladite couche C étant croissante en allant de l'extrémité axiale de la zone de couplage à l'extrémité de la couche de travail 43 la moins large. La couche C a avantageusement une largeur suffisante pour recouvrir radialement l'extrémité de la couche de travail 41 la plus large, qui est, dans ce cas la couche de travail radialement la plus proche de l'armature de carcasse.

La réalisation de pneumatiques selon l'invention a mis en évidence une simplification de la fabrication, du conditionnement et du stockage de la couche C de mélange caoutchouteux en tant que produit semi-fini avant de réaliser le pneumatique. La réalisation elle-même du pneumatique est également simplifiée, la mise en place et la précision de mise en place de ladite couche C étant plus simple du fait de sa forme homogène concernant sa section.

Malgré la présence d'une couche d'éléments de renforcement circonférentiels supplémentaire dans l'architecture du pneumatique, il apparaît que pour certaines dimensions de pneumatiques, les coûts de fabrication peuvent être réduits grâce à ces simplifications de fabrication de gestion et de mise en oeuvre de la couche C de mélange caoutchouteux.

Par ailleurs, des essais ont été réalisés avec différents pneumatiques réalisés selon l'invention conformément à la représentation de la figure 1 et comparés avec un premier pneumatique de référence ne comportant pas de couches d'éléments de renforcement circonférentiels et comportant une couche C de mélange caoutchouteux non-conforme à celle de l'invention et présentant une distance d égale à 3.5 mm et un profil de sa section arrondi.

Des essais sont en outre réalisés avec des pneumatiques selon l'invention en faisant varier les caractéristiques des mélanges de la couche C, notamment leur module d'élasticité sous tension à 10 % d'allongement et la valeur $\tan(\delta)_{max}$ conformément à l'invention.

D'autres essais sont encore réalisés avec des pneumatiques selon l'invention en faisant également varier les caractéristiques des mélanges couches de calandrage des couches de travail 41 et 43, notamment leur module d'élasticité sous tension à 10 % d'allongement et la valeur $\tan(\delta)_{max}$, conformément à l'invention.

Les différents mélanges utilisés sont listés ci-après, en exprimant pour chacun le module d'élasticité sous tension à 10 % d'allongement ainsi que les valeurs $\tan(\delta)_{max}$ et P60.

|  | Mélange R1 | Mélange R2 | Mélange 1 | Mélange 2 | Mélange 3 | Mélange 4 | Mélange 5 |
|---|---|---|---|---|---|---|---|
| NR | 100 | 100 | 100 | 100 | 100 | 100 | 100 |
| Noir N347 | 52 | 50 |  | 33 |  |  |  |
| Noir N683 |  |  |  |  |  | 44 | 30 |
| Noir N326 |  |  | 47 |  |  |  |  |
| Silice 165G |  |  |  |  | 46 |  |  |
| Antioxydant (6PPD) | 1 | 1.8 | 1.5 | 1 | 2 | 1 | 1 |
| Acide stéarique | 0.65 | 0.6 | 0.9 | 0.65 | 1 | 0.65 | 0.65 |
| Oxyde de zinc | 9.3 | 9.3 | 7.5 | 9.3 | 8 | 9.3 | 9.3 |
| Sel de Cobalt (AcacCo) | 1.12 |  | 1.12 | 1.12 | 1.1 | 1.12 | 1.12 |
| Sel de Cobalt (AbietateCo) |  | 4.5 |  |  |  |  |  |
| Silane sur noir |  |  |  |  | 8.3 |  |  |
| soufre | 6.1 | 5.6 | 4.5 | 6.1 | 4.8 | 6.1 | 6.1 |
| Accélérateur DCBS | 0.93 | 0.8 | 0.8 | 0.93 |  | 0.93 | 0.93 |
| Accélérateur TBBS |  |  |  |  | 1.01 |  |  |

(suite)

| | Mélange R1 | Mélange R2 | Mélange 1 | Mélange 2 | Mélange 3 | Mélange 4 | Mélange 5 |
|---|---|---|---|---|---|---|---|
| Co-accélérateur DPG | | | | | 1.1 | | |
| Retardateur CTP PVI) | 0.25 | | 0.15 | 0.25 | 0.2 | 0.25 | 0.25 |
| $MA_{10}$(MPa) | 10.4 | 8.5 | 5.99 | 5.56 | 7.25 | 6.16 | 4.4 |
| $\tan(\delta)_{max}$ | 0.130 | 0.141 | 0.099 | 0.074 | 0.063 | 0.056 | 0.030 |
| P60 (%) | 22.9 | 24.5 | 18.7 | 14.9 | 13.3 | 12.2 | 8.5 |

Les valeurs des constituants sont exprimées en pce (parties en poids pour cent parties d'élastomères.

Concernant le pneumatique de référence, la couche C est constituée du mélange R2 et les calandrages des couches de travail sont constitués du mélange R1.

Différents pneumatiques selon l'invention ont été testés.

Une première série de pneumatiques S1 conforme à l'invention a été réalisée avec une première couche C constituée du mélange R2, les calandrages des couches de travail étant constitués du mélange R1.

Une deuxième série de pneumatiques S2 conforme à l'invention a été réalisée avec une première couche C constituée des mélanges 1 à 5, les calandrages des couches de travail étant constitués du mélange R1.

Une troisième série de pneumatiques S3 conforme à l'invention a été réalisée avec une première couche C constituée du mélange R2, les calandrages des couches de travail étant constitués des mélanges 1 à 5.

Une quatrième série de pneumatiques S4 conforme à l'invention a été réalisée avec une première couche C constituée des mélanges 1 à 5, les calandrages des couches de travail étant également constitués des mélanges 1 à 5. Certains pneumatiques de cette série S2 ont été réalisés avec des mélanges identiques pour la couche C et les calandrages des couches de travail et d'autres avec des mélanges différents.

Des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 4000 Kg progressivement augmentée pour réduire la durée du test.

D'autres essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les essais ainsi réalisés ont montré que les distances parcourues lors de chacun de ces tests sont au moins aussi importantes pour les pneumatiques selon l'invention que les pneumatiques de référence. Il apparaît donc que les pneumatiques selon l'invention présentent des performances en termes d'endurance au moins aussi bonnes que celles des pneumatiques de référence. Les séries de pneumatiques S2 et S4 réalisées conformément à l'invention ont notamment présentées des résultats supérieurs.

D'autres essais de roulage ont été effectués sur des sols non bitumés constitués de cailloux particulièrement agressifs pour les bandes de roulement des pneumatiques.

Ces derniers essais ont montré qu'après des distances parcourues identiques les pneumatiques selon l'invention et plus particulièrement ceux des séries S3 et S4 présentent des altérations moins nombreuses et moins importantes que celles des pneumatiques de référence.

Ces essais montrent notamment qu'outre la conception des pneumatiques selon l'invention qui autorise une simplification de la forme de la couche C de mélange caoutchouteux conformément à l'invention, la combinaison de cette forme de la couche C avec une diminution du module d'élasticité de la couche de mélange caoutchouteux C et de ceux des calandrages des couches de sommet de travail, conduit à des performances d'endurance satisfaisantes lorsqu'une couche d'éléments de renforcement circonférentiels est présente.

Par ailleurs, des mesures de résistance au roulement ont été effectuées. Ces mesures ont portés sur un premier pneumatique de référence T1 tel que décrit précédemment, sur un deuxième pneumatique de référence T2 identique au précédent et comportant en outre une couche d'éléments de renforcement circonférentiels identiques à celle des pneumatiques selon l'invention, sur un pneumatique de la série S1, sur un pneumatique de la série S2 dont la couche C est constituée du mélange 1, sur un pneumatique de la Série S3 dont les couches de calandrage sont constituées du mélange 1 et sur un pneumatique de la Série S4 dont la couche C et les couches de calandrage sont constituées du mélange 1.

Les résultats des mesures sont présentés dans le tableau suivant ; elles sont exprimées en Kg/t, une valeur de 100 étant attribuée au pneumatique T1.

| Pneumatique T1 | Pneumatique T2 | Pneumatique S1 | Pneumatique S2 | Pneumatique S3 | Pneumatique S4 |
|:---:|:---:|:---:|:---:|:---:|:---:|
| 100 | 101 | 100 | 98 | 97 | 95 |

**Revendications**

1. Pneumatique (1) à armature de carcasse radiale comprenant une armature de sommet (4) formée d'au moins deux couches de sommet de travail (41, 43) d'éléments de renforcement, croisés d'une couche à l'autre en faisant avec la direction circonférentielle des angles compris entre 10° et 45°, lesdites au moins deux couches de sommet de travail (41, 43) ayant des largeurs axiales inégales, une couche C de mélange caoutchouteux étant disposée entre au moins les extrémités desdites au moins deux couches de sommet de travail (41, 43), l'armature de sommet (4) étant coiffée radialement d'une bande de roulement (5), ladite bande de roulement étant réunie à deux bourrelets par l'intermédiaire de deux flancs, l'armature de sommet comportant au moins une couche (42) d'éléments de renforcement circonférentiels radialement disposée entre deux couches de sommet de travail (41, 43), **caractérisé en ce que** la distance d entre l'extrémité de la couche de travail (43) axialement la plus étroite et la couche de travail (41) séparée de la couche de travail (43) axialement la plus étroite par la couche C de mélange caoutchouteux est telle que $1.1ø < d < 2.2ø$, ø étant le diamètre des éléments de renforcement de ladite au moins une couche (42) d'éléments de renforcement circonférentiels et **en ce que,** dans un plan méridien, l'épaisseur de la couche C de mélange caoutchouteux est sensiblement constante sur la largeur axiale D comprise entre l'extrémité axialement intérieure de la couche C et l'extrémité de la couche de travail (43) axialement la plus étroite.

2. Pneumatique (1) selon la revendication 1, **caractérisé en ce que** le module d'élasticité sous tension à 10 % d'allongement de la première couche C est inférieur à 8 MPa et **en ce que** la valeur maximale de $\tan(\delta)$, noté $\tan(\delta)_{max}$, de la première couche C est inférieure à 0.100.

3. Pneumatique (1) selon la revendication 2, **caractérisé en ce que** la couche C de mélange caoutchouteux est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :

    a) soit par du noir de carbone de surface spécifique BET supérieure à 60 m²/g,

       i. employé à un taux compris entre 20 et 40 pce lorsque l'indice de structure du noir (COAN) est supérieur à 85,
       ii. employé à un taux compris entre 20 et 60 pce lorsque l'indice de structure du noir (COAN) est inférieur à 85,

    b) soit par du noir de carbone de surface spécifique BET inférieure à 60 m²/g, quelle que soit son indice de structure, employé à un taux compris entre 20 et 80 pce, et de préférence entre 30 et 50 pce,
    c) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique BET comprise entre 30 et 260 m²/g employée à un taux compris entre 20 et 80 pce, et de préférence entre 30 et 50 pce,
    d) soit par un coupage de noir de carbone décrit en (a) et/ou de noir de carbone décrit en (b) et/ou une charge blanche décrite en (c), dans lequel le taux global de charge est compris entre 20 et 80 pce, et de préférence entre 40 et 60 pce.

4. Pneumatique (1) selon l'une des revendications 1 à 3, au moins une couche de mélange caoutchouteux B bordant l'extrémité d'une couche de sommet de travail, **caractérisé en ce que** le module d'élasticité sous tension à 10 % d'allongement de ladite au moins une couche de mélange caoutchouteux B est inférieur à 8 MPa et **en ce que** la valeur maximale de $\tan(\delta)$, noté $\tan(\delta)max$, de ladite couche de mélange caoutchouteux B est inférieure à 0.100.

5. Pneumatique (1) selon l'une des revendications précédentes, lesdites au moins deux couches de sommet de travail (41, 43) étant chacune formée d'éléments de renforcement insérés entre deux couches de calandrage de mélange caoutchouteux, **caractérisé en ce que** le module d'élasticité sous tension à 10 % d'allongement d'au moins une couche de calandrage d'au moins une couche de sommet de travail est inférieur à 8,5 MPa et **en ce que** la valeur maximale de $\tan(\delta)$, noté $\tan(\delta)max$, de ladite au moins une couche de calandrage d'au moins une couche de sommet de travail est inférieure à 0.100.

**6.** Pneumatique (1) selon la revendication 5, **caractérisé en ce que** ladite au moins une couche de calandrage d'au moins une couche de sommet de travail (41, 43) est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :

a) soit par du noir de carbone de surface spécifique BET supérieure à 60 m$^2$/g,

i. employé à un taux compris entre 20 et 40 pce lorsque l'indice de structure du noir (COAN) est supérieur à 85,
ii. employé à un taux compris entre 20 et 60 pce lorsque l'indice de structure du noir (COAN) est inférieur à 85,

b) soit par du noir de carbone de surface spécifique BET inférieure à 60 m$^2$/g, quelle que soit son indice de structure, employé à un taux compris entre 20 et 80 pce, et de préférence entre 30 et 50 pce,
c) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique BET comprise entre 30 et 260 m$^2$/g employée à un taux compris entre 20 et 80 pce, et de préférence entre 30 et 50 pce,
d) soit par un coupage de noir de carbone décrit en (a) et/ou de noir de carbone décrit en (b) et/ou une charge blanche décrite en (c), dans lequel le taux global de charge est compris entre 20 et 80 pce, et de préférence entre 40 et 60 pce.

**7.** Pneumatique (1) selon l'une des revendications 5 ou 6, **caractérisé en ce que** la différence entre le module d'élasticité sous tension à 10 % d'allongement de la couche C et le module d'élasticité sous tension à 10 % d'allongement de ladite au moins une couche de calandrage d'au moins une couche de sommet de travail est inférieure à 2 MPa.

**8.** Pneumatique (1) selon l'une des revendications précédentes, **caractérisé en ce que** lesdits éléments de renforcement d'au moins une couche de sommet de travail (41, 43) sont des câbles à couches saturées, au moins une couche interne étant gainée d'une couche constituée d'une composition polymérique telle qu'une composition de caoutchouc non réticulable, réticulable ou réticulée, de préférence à base d'au moins un élastomère diénique.

**9.** Pneumatique (1) selon l'une des revendications précédentes, **caractérisé en ce que** la différence entre la largeur axiale de la couche de sommet de travail (41) axialement la plus large et la largeur axiale de la couche de sommet de travail (43) axialement la moins large est comprise entre 10 et 30 mm.

**10.** Pneumatique (1) selon l'une des revendications précédentes, **caractérisé en ce que** la couche de sommet de travail (41) axialement la plus large est radialement à l'intérieur des autres couches de sommet de travail (43).

**11.** Pneumatique selon l'une des revendications précédentes, **caractérisé en ce que** les largeurs axiales des couches de sommet de travail radialement adjacentes à la couche d'éléments de renforcement circonférentiels sont supérieures à la largeur axiale de ladite couche d'éléments de renforcement circonférentiels.

**12.** Pneumatique (1) selon la revendication 11, **caractérisé en ce que** les couches de sommet de travail (41, 43) adjacentes à la couche (42) d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par ladite couche C de mélange caoutchouteux au moins sur le restant de la largeur commune aux dites deux couches de travail.

**13.** Pneumatique (1) selon l'une des revendications précédentes, **caractérisé en ce que** les éléments de renforcement de ladite au moins une couche (42) d'éléments de renforcement circonférentiels sont des éléments de renforcement métalliques présentant un module sécant à 0,7 % d'allongement compris entre 10 et 120 GPa et un module tangent maximum inférieur à 150 GPa.

**14.** Pneumatique (1) selon l'une des revendications précédentes, **caractérisé en ce que** les éléments de renforcement des couches de sommet de travail (41, 43) sont inextensibles.

**15.** Pneumatique (1) selon l'une des revendications précédentes, **caractérisé en ce que** l'angle formé avec la direction circonférentielle par les éléments de renforcement des couches de sommet de travail (41, 43) est inférieur à 30° et de préférence inférieur à 25°.

16. Pneumatique (1) selon l'une des revendications précédentes, **caractérisé en ce que** l'armature de sommet (4) est complétée radialement à l'extérieur par au moins une nappe supplémentaire (44), dite de protection, d'éléments de renforcement dits élastiques, orientés par rapport à la direction circonférentielle avec un angle compris entre 10° et 45° et de même sens que l'angle formé par les éléments inextensibles de la nappe de travail (43) qui lui est radialement adjacente.

17. Pneumatique (1) selon l'une des revendications précédentes, **caractérisé en ce que** l'armature de sommet (4) comporte en outre une couche de triangulation formée d'éléments de renforcement métalliques faisant avec la direction circonférentielle des angles supérieurs à 60°.

**Patentansprüche**

1. Reifen (1) mit radialer Karkassenbewehrung, die eine Scheitelbewehrung (4) enthält, welche von wenigstens zwei Arbeitsscheitelschichten (41, 43) von Verstärkungselementen gebildet wird, die sich von einer Schicht zur anderen kreuzen, indem sie mit der Umfangsrichtung Winkel zwischen 10° und 45° bilden, wobei die wenigstens zwei Arbeitsscheitelschichten (41, 43) unterschiedliche axiale Breiten aufweisen, wobei eine Schicht C einer Kautschukmischung zwischen wenigstens den Enden der wenigstens zwei Arbeitsscheitelschichten (41, 43) angeordnet ist, wobei die Scheitelbewehrung (4) radial von einem Laufstreifen (5) überlagert wird, wobei der Laufstreifen über zwei Seitenwände mit zwei Wülsten verbunden ist, wobei die Scheitelbewehrung wenigstens eine Schicht (42) von Umfangsverstärkungselementen aufweist, die radial zwischen zwei Arbeitsscheitelschichten (41, 43) angeordnet ist, **dadurch gekennzeichnet, dass** der Abstand d zwischen dem Ende der axial schmalsten Arbeitsschicht (43) und der Arbeitsschicht (41), die von der axial schmalsten Arbeitsschicht (43) durch die Schicht C einer Kautschukmischung getrennt ist, so beschaffen ist, dass 1,1 Ø < d < 2,2 Ø ist, wobei Ø der Durchmesser der Verstärkungselemente der wenigstens einen Schicht (42) von Umfangsverstärkungselementen ist, und dadurch, dass in einer Meridianebene die Dicke der Schicht C einer Kautschukmischung im Wesentlichen konstant über die axiale Breite D zwischen dem axial inneren Ende der Schicht C und dem Ende der axial schmalsten Arbeitsschicht (43) ist.

2. Reifen (1) nach Anspruch 1, **dadurch gekennzeichnet, dass** der Elastizitätsmodul unter Spannung bei 10 % Dehnung der ersten Schicht C kleiner als 8 MPa ist und dass der maximale Wert von $\tan(\delta)$, mit $\tan(\delta)_{max}$ bezeichnet, der ersten Schicht C kleiner als 0,100 ist.

3. Reifen (1) nach Anspruch 2, **dadurch gekennzeichnet, dass** die Schicht C einer Kautschukmischung eine Elastomermischung auf der Basis von Naturkautschuk oder von synthetischem Polyisopren mit überwiegender cis-1,4-Verknüpfung und eventuell wenigstens einem weiteren Dienelastomer ist, wobei der Naturkautschuk oder das synthetische Polyisopren im Falle eines Verschnitts in einem überwiegenden Anteil vorhanden ist, bezogen auf den Anteil des weiteren oder der weiteren verwendeten Dienelastomere und eines verstärkenden Füllstoffs, welcher besteht:

   a) entweder aus Ruß mit einer spezifischen Oberfläche BET, die größer als 60 m$^2$/g ist,

      i. der in einem Anteil zwischen 20 und 40 pce verwendet wird, wenn der Strukturindex des Rußes (COAN) größer als 85 ist,
      ii. der in einem Anteil zwischen 20 und 60 pce verwendet wird, wenn der Strukturindex des Rußes (COAN) kleiner als 85 ist,

   b) oder aus Ruß mit einer spezifischen Oberfläche BET, die kleiner als 60 m$^2$/g ist, ungeachtet seines Strukturindex, der in einem Anteil zwischen 20 und 80 pce und vorzugsweise zwischen 30 und 50 pce verwendet wird,
   c) oder aus einem hellen Füllstoff vom Typ Kieselsäure und/oder Aluminiumoxid, der SiOH- und/oder AlOH-Oberflächengruppen aufweist und aus der Gruppe ausgewählt ist, die von den gefällten oder pyrogenen Kieselsäuren, den Aluminiumoxiden oder den Aluminiumsilikaten oder auch den während oder nach der Synthese modifizierten Rußen gebildet wird, mit einer spezifischen Oberfläche BET zwischen 30 und 260 m$^2$/g, und der in einem Anteil zwischen 20 und 80 pce und vorzugsweise zwischen 30 und 50 pce verwendet wird,
   d) oder aus einem Verschnitt von unter (a) beschriebenem Ruß und/oder von unter (b) beschriebenem Ruß und/oder von einem unter (c) beschriebenen hellen Füllstoff, wobei der Gesamtfüllstoffanteil zwischen 20 und 80 pce und vorzugsweise zwischen 40 und 60 pce beträgt.

4. Reifen (1) nach einem der Ansprüche 1 bis 3, wobei wenigstens eine Schicht einer Kautschukmischung B das Ende einer Arbeitsscheitelschicht umrandet, **dadurch gekennzeichnet, dass** der Elastizitätsmodul unter Spannung bei 10 % Dehnung der wenigstens einen Schicht einer Kautschukmischung B kleiner als 8 MPa ist, und dadurch, dass der maximale Wert von tan($\delta$), mit tan($\delta$)max bezeichnet, der Schicht einer Kautschukmischung B kleiner als 0,100 ist.

5. Reifen (1) nach einem der vorhergehenden Ansprüche, wobei die wenigstens zwei Arbeitsscheitelschichten (41, 43) jeweils von Verstärkungselementen gebildet werden, die zwischen zwei Kalandrierschichten aus einer Kautschukmischung eingesetzt sind, **dadurch gekennzeichnet, dass** der Elastizitätsmodul unter Spannung bei 10 % Dehnung wenigstens einer Kalandrierschicht wenigstens einer Arbeitsscheitelschicht kleiner als 8,5 MPa ist, und dadurch, dass der maximale Wert von tan ($\delta$), mit tan($\delta$)max bezeichnet, der wenigstens einen Kalandrierschicht wenigstens einer Arbeitsscheitelschicht kleiner als 0,100 ist.

6. Reifen (1) nach Anspruch 5, **dadurch gekennzeichnet, dass** die wenigstens eine Kalandrierschicht wenigstens einer Arbeitsscheitelschicht (41, 43) eine Elastomermischung auf der Basis von Naturkautschuk oder von synthetischem Polyisopren mit überwiegender cis-1,4-Verknüpfung und eventuell wenigstens einem weiteren Dienelastomer ist, wobei der Naturkautschuk oder das synthetische Polyisopren im Falle eines Verschnitts in einem überwiegenden Anteil vorhanden ist, bezogen auf den Anteil des weiteren oder der weiteren verwendeten Dienelastomere und eines verstärkenden Füllstoffs, welcher besteht:

   a) entweder aus Ruß mit einer spezifischen Oberfläche BET, die größer als 60 m$^2$/g ist,

   i) der in einem Anteil zwischen 20 und 40 pce verwendet wird, wenn der Strukturindex des Rußes (COAN) größer als 85 ist,
   ii) der in einem Anteil zwischen 20 und 60 pce verwendet wird, wenn der Strukturindex des Rußes (COAN) kleiner als 85 ist,

   b) oder aus Ruß mit einer spezifischen Oberfläche BET, die kleiner als 60 m$^2$/g ist, ungeachtet seines Strukturindex, der in einem Anteil zwischen 20 und 80 pce und vorzugsweise zwischen 30 und 50 pce verwendet wird,
   c) oder aus einem hellen Füllstoff vom Typ Kieselsäure und/oder Aluminiumoxid, der SiOH- und/oder AlOH-Oberflächengruppen aufweist und aus der Gruppe ausgewählt ist, die von den gefällten oder pyrogenen Kieselsäuren, den Aluminiumoxiden oder den Aluminiumsilikaten oder auch den während oder nach der Synthese modifizierten Rußen gebildet wird, mit einer spezifischen Oberfläche BET zwischen 30 und 260 m$^2$/g, und der in einem Anteil zwischen 20 und 80 pce und vorzugsweise zwischen 30 und 50 pce verwendet wird,
   d) oder aus einem Verschnitt von unter (a) beschriebenem Ruß und/oder von unter (b) beschriebenem Ruß und/oder von einem unter (c) beschriebenen hellen Füllstoff, wobei der Gesamtfüllstoffanteil zwischen 20 und 80 pce und vorzugsweise zwischen 40 und 60 pce beträgt.

7. Reifen (1) nach einem der Ansprüche 5 oder 6, **dadurch gekennzeichnet, dass** die Differenz zwischen dem Elastizitätsmodul unter Spannung bei 10 % Dehnung der Schicht C und dem Elastizitätsmodul unter Spannung bei 10 % Dehnung der wenigstens einen Kalandrierschicht wenigstens einer Arbeitsscheitelschicht kleiner als 2 MPa ist.

8. Reifen (1) nach einem der vorhergehenden Ansprüche, **dadurch gekennzeichnet, dass** die Verstärkungselemente wenigstens einer Arbeitsscheitelschicht (41, 43) Seile mit gesättigten Schichten sind, wobei wenigstens eine innere Schicht von einer Schicht umhüllt wird, die aus einer Polymerzusammensetzung wie etwa einer nicht vernetzbaren, vernetzbaren oder vernetzten Kautschukzusammensetzung besteht, vorzugsweise auf der Basis wenigstens eines Dienelastomers.

9. Reifen (1) nach einem der vorhergehenden Ansprüche, **dadurch gekennzeichnet, dass** die Differenz zwischen der axialen Breite der axial breitesten Arbeitsscheitelschicht (41) und der axialen Breite der axial am wenigsten breiten Arbeitsscheitelschicht (43) zwischen 10 und 30 mm liegt.

10. Reifen (1) nach einem der vorhergehenden Ansprüche, **dadurch gekennzeichnet, dass** sich die axial breiteste Arbeitsscheitelschicht (41) radial innerhalb der anderen Arbeitsscheitelschichten (43) befindet.

11. Reifen nach einem der vorhergehenden Ansprüche, **dadurch gekennzeichnet, dass** die axialen Breiten der Arbeitsscheitelschichten, die der Schicht von Umfangsverstärkungselementen radial benachbart sind, größer als die axiale Breite der Schicht von Umfangsverstärkungselementen sind.

12. Reifen (1) nach Anspruch 11, **dadurch gekennzeichnet, dass** die Arbeitsscheitelschichten (41, 43), die der Schicht (42) von Umfangsverstärkungselementen radial benachbart sind, zu beiden Seiten der Äquatorialebene und in der direkten axialen Verlängerung der Schicht von Umfangsverstärkungselementen über eine axiale Breite gekoppelt sind, um anschließend durch die Schicht C einer Kautschukmischung über wenigstens den Rest der den zwei Arbeitsschichten gemeinsamen Breite entkoppelt zu sein.

13. Reifen (1) nach einem der vorhergehenden Ansprüche, **dadurch gekennzeichnet, dass** die Verstärkungselemente der wenigstens eine Schicht (42) von Umfangsverstärkungselementen metallische Verstärkungselemente sind, die einen Sekantenmodul bei 0,7 % Dehnung, der zwischen 10 und 120 GPa liegt, und einen maximalen Tangentenmodul, der kleiner als 150 GPa ist, aufweisen.

14. Reifen (1) nach einem der vorhergehenden Ansprüche, **dadurch gekennzeichnet, dass** die Verstärkungselemente der Arbeitsscheitelschichten (41, 43) nicht dehnbar sind.

15. Reifen (1) nach einem der vorhergehenden Ansprüche, **dadurch gekennzeichnet, dass** der von den Verstärkungselementen der Arbeitsscheitelschichten (41, 43) mit der Umfangsrichtung gebildete Winkel kleiner als 30° und vorzugsweise kleiner als 25° ist.

16. Reifen (1) nach einem der vorhergehenden Ansprüche, **dadurch gekennzeichnet, dass** die Scheitelbewehrung (4) radial außen durch wenigstens eine zusätzliche, Schutzlage genannte Lage (44) von sogenannten elastischen Verstärkungselementen vervollständigt wird, die bezüglich der Umfangsrichtung mit einem Winkel zwischen 10° und 45° und von gleicher Richtung wie der von den nicht dehnbaren Elementen der Arbeitslage (43), die ihr radial benachbart ist, gebildete Winkel ausgerichtet sind.

17. Reifen (1) nach einem der vorhergehenden Ansprüche, **dadurch gekennzeichnet, dass** die Scheitelbewehrung (4) außerdem eine Triangulationsschicht aufweist, die von metallischen Verstärkungselementen gebildet wird, welche mit der Umfangsrichtung Winkel von mehr als 60° bilden.

**Claims**

1. Tyre (1) having a radial carcass reinforcement comprising a crown reinforcement (4) formed of at least two working crown layers (41, 43) of reinforcing elements crossed from one layer to the other while forming, with the circumferential direction, angles of between 10° and 45°, the said at least two working crown layers (41, 43) having unequal axial widths, a layer C of rubber mixture being positioned between at least the ends of the said at least two working crown layers (41, 43), the crown reinforcement (4) being topped radially by a tread (5), the said tread being joined to two beads via two sidewalls, the crown reinforcement comprising at least one layer (42) of circumferential reinforcing elements positioned radially between two working crown layers (41, 43), **characterized in that** the distance d between the end of the axially narrowest working layer (43) and the working layer (41) separated from the axially narrowest working layer (43) by the layer C of rubber mixture is such that 1.1ø < d < 2.2ø, ø being the diameter of the reinforcing elements of the said at least one layer (42) of circumferential reinforcing elements, and **in that**, in a meridian plane, the thickness of the layer C of rubber mixture is substantially uniform over the axial width between the axially interior end of the layer C and the end of the axially narrowest working layer (43).

2. Tyre (1) according to Claim 1, **characterized in that** the tensile modulus of elasticity at 10% elongation of the first layer C is less than 8 MPa and **in that** the maximum tan($\delta$) value, denoted tan($\delta$)$_{max}$, of the first layer C is less than 0.100.

3. Tyre (1) according to Claim 2, **characterized in that** the layer C of rubber mixture is an elastomeric mixture based on natural rubber or on synthetic polyisoprene predominantly comprising cis-1,4 enchainments and optionally on at least one other diene elastomer, the natural rubber or the synthetic polyisoprene, in the case of a blend, being present at a predominant content with respect to the content of the other diene elastomer(s) used, and on a reinforcing filler consisting:

    a) either of carbon black with a BET specific surface of greater than 60 m$^2$/g,

        i. employed at a content of between 20 and 40 phr when the structural index of the black (COAN) is greater than 85,
        ii. employed at a content of between 20 and 60 phr when the structural index of the black (COAN) is less than 85,

b) or of carbon black with a BET specific surface of less than 60 m²/g, whatever its structural index, employed at a content of between 20 and 80 phr and preferably between 30 and 50 phr,

c) or of a white filler of silica and/or alumina type comprising SiOH and/or AlOH surface functional groups, selected from the group consisting of precipitated or fumed silicas, aluminas and aluminosilicates, or alternatively carbon blacks modified during or after the synthesis having a BET specific surface of between 30 and 260 m²/g, employed at a content of between 20 and 80 phr and preferably between 30 and 50 phr,

d) or of a blend of carbon black described in (a) and/or of carbon black described in (b) and/or a white filler described in (c), in which the overall content of filler is between 20 and 80 phr and preferably between 40 and 60 phr.

4. Tyre (1) according to one of Claims 1 to 3, at least one layer of rubber mixture B bordering the end of a working crown layer, **characterized in that** the tensile modulus of elasticity at 10% elongation of the said at least one layer of rubber mixture B is less than 8 MPa and **in that** the maximum tan($\delta$) value, denoted tan($\delta$)$_{max}$, for the said layer of rubber mixture B is less than 0.100.

5. Tyre (1) according to one of the preceding claims, the said at least two working crown layers (41, 43), each being formed of reinforcing elements inserted between two calendering layers of rubber mixture, **characterized in that** the tensile modulus of elasticity at 10% elongation of at least one calendering layer of at least one working crown layer is less than 8,5 MPa and **in that** the maximum tan($\delta$) value, denoted tan($\delta$)$_{max}$, of the said at least one calendering layer of at least one working crown layer is less than 0.100.

6. Tyre (1) according to Claim 5, **characterized in that** the said at least one calendering layer of at least one working crown layer (41, 43) is an elastomeric mixture based on natural rubber or on synthetic polyisoprene predominantly comprising cis-1,4 enchainments and optionally on at least one other diene elastomer, the natural rubber or the synthetic polyisoprene, in the case of a blend, being present at a predominant content with respect to the content of the other diene elastomer(s) used, and on a reinforcing filler consisting:

a) either of carbon black with a BET specific surface of greater than 60 m²/g,

i. employed at a content of between 20 and 40 phr when the structural index of the black (COAN) is greater than 85,

ii. employed at a content of between 20 and 60 phr when the structural index of the black (COAN) is less than 85,

b) or of carbon black with a BET specific surface of less than 60 m²/g, whatever its structural index, employed at a content of between 20 and 80 phr and preferably between 30 and 50 phr,

c) or of a white filler of silica and/or alumina type comprising SiOH and/or AlOH surface functional groups, selected from the group consisting of precipitated or fumed silicas, aluminas and aluminosilicates, or alternatively carbon blacks modified during or after the synthesis having a BET specific surface of between 30 and 260 m²/g, employed at a content of between 20 and 80 phr and preferably between 30 and 50 phr,

d) or of a blend of carbon black described in (a) and/or of carbon black described in (b) and/or a white filler described in (c), in which the overall content of filler is between 20 and 80 phr and preferably between 40 and 60 phr.

7. Tyre (1) according to either of Claims 5 and 6, **characterized in that** the difference between the tensile modulus of elasticity at 10% elongation of the layer C and the tensile modulus of elasticity at 10% elongation of the said at least one calendering layer of at least one working crown layer is less than 2 MPa.

8. Tyre (1) according to one of the preceding claims, **characterized in that** the said reinforcing elements of at least one working crown layer (41, 43) are saturated layered cords, at least one inner liner being sheathed with a layer consisting of a polymeric composition, such as a non-crosslinkable, crosslinkable or crosslinked rubber composition, preferably based on at least one diene elastomer.

9. Tyre (1) according to one of the preceding claims, **characterized in that** the difference between the axial width of the axially widest working crown layer (41) and the axial width of the axially narrowest working crown layer (43) is between 10 and 30 mm.

**10.** Tyre (1) according to one of the preceding claims, **characterized in that** the axially widest working crown layer (41) is radially interior to the other working crown layers (43).

**11.** Tyre according to one of the preceding claims, **characterized in that** the axial widths of the working crown layers radially adjacent to the layer of circumferential reinforcing elements are greater than the axial width of the said layer of circumferential reinforcing elements.

**12.** Tyre (1) according to Claim 11, **characterized in that** the working crown layers (41, 43) adjacent to the layer (42) of circumferential reinforcing elements are on either side of the equatorial plane and, in the immediate axial extension of the layer of circumferential reinforcing elements, coupled over an axial width, in order to be subsequently decoupled by the said layer C of rubber mixture at least over the remainder of the width common to the said two working layers.

**13.** Tyre (1) according to one of the preceding claims, **characterized in that** the reinforcing elements of the said at least one layer (42) of circumferential reinforcing elements are metal reinforcing elements exhibiting a secant modulus at 0.7% elongation of between 10 and 120 GPa and a maximum tangent modulus of less than 150 GPa.

**14.** Tyre (1) according to one of the preceding claims, **characterized in that** the reinforcing elements of the working crown layers (41, 43) are inextensible.

**15.** Tyre (1) according to one of the preceding claims, **characterized in that** the angle formed by the reinforcing elements of the working crown layers (41, 43) with the circumferential direction is less than 30° and preferably less than 25°.

**16.** Tyre (1) according to one of the preceding claims, **characterized in that** the crown reinforcement (4) is supplemented radially on the outside by at least one additional ply (44), known as protective ply, of "elastic" reinforcing elements, which are oriented, with respect to the circumferential direction, with an angle of between 10° and 45° and in the same direction as the angle formed by the inextensible elements of the working ply (43) radially adjacent to it.

**17.** Tyre (1) according to one of the preceding claims, **characterized in that** the crown reinforcement (4) additionally comprises a triangulation layer formed of metal reinforcing elements forming, with the circumferential direction, angles greater than 60°.

**FIG.1**

**FIG.2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004076204 A
- FR 1389428
- FR 2222232
- WO 9924269 A
- FR 2778370
- EP 0849099 A
- EP 0799854 A
- WO 2006013077 A
- WO 2009083212 A

**Littérature non-brevet citée dans la description**

- **BRUNAUER ; EMMET ; TELLER.** *The Journal of the American Chemical Society,* Février 1938, vol. 60, 309